(19) Europäisches Patentamt

European Patent Office

Office européen des brevets

(11) **EP 1 503 605 A2**

(12) **EUROPEAN PATENT APPLICATION**

(43) Date of publication:
02.02.2005  Bulletin 2005/05

(51) Int Cl.7: **H04Q 7/32**

(21) Application number: 04017212.4

(22) Date of filing: 21.07.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: 25.07.2003 KR 2003051522

(71) Applicant: **LG ELECTRONICS INC.**
**Seoul (KR)**

(72) Inventor: **Kim, Te-Hyun**
**Uiwang Gyeonggi-do (KR)**

(74) Representative: **von Hellfeld, Axel, Dr. Dipl.-Phys.**
**Wuesthoff & Wuesthoff**
**Patent- und Rechtsanwälte**
**Schweigerstrasse 2**
**81541 München (DE)**

(54) **Paging indicator deciding method of mobile communication terminal**

(57)    A paging indicator deciding method of a mobile communication terminal in which a threshold value for deciding a paging indicator is variably set according to an SNR of a pilot channel. If the checked SNR of the pilot channel is in a range that a false alarm rate (FAR) has a large value, the mobile communication terminal determines a threshold value so that it can have the greatest value in a range that a miss probability (MP) does not exceed the standard value. If the SNR of the pilot channel checked is not in the range that the SNR has the large value, the mobile communication terminal determines a threshold value to obtain the smallest MP in a rage that the FAR is not increased any more. Since the paging indicator can be accurately decided by lowering the MP and the FAR, standby time and incoming probability of the mobile communication can be optimized.

FIG. 4

S10 — ESTIMATE SNR OF PAGING INDICATOR

S12 — ESTIMATE SNR OF PILOT CHANNEL

S14 — ESTIMATE RSSI OF PAGING INDICATOR CHANNEL

S16 — RSSI < PREDETERMINED VALUE?

NO

YES

S18 — SELECT MODE FOR DEMODULATING PAGE MESSAGE

SELECT MODE FOR DECIDING PAGING INDICATOR — S20

**Description**

BACKGROUND OF THE INVENTION

1.      Field of the Invention

The present invention relates to a paging indicator deciding method of a mobile communication terminal.

2.      Description of the Related Art

Researches are ongoing to extend standby time (battery usage time) of third-generation (3G) mobile communication terminals, one of which, for example, is a wireless communication technique for operating a mobile communication terminal in a slotted mode. In order for the mobile communication terminal to be operated in the slotted mode, a base station transmits information to be transmitted to a corresponding mobile communication terminal at predetermined time (corresponding slot) and the mobile communication terminal is switched from a sleep mode (sleep state) to an idle mode (idle state) to check whether there is information being transmitted to the mobile communication terminal itself only at the determined time (corresponding slot), and operates in the sleep mode for other time than the determined time. Accordingly, the standby time of the mobile communication terminal increases.

A mobile communication system transmits a page message for paging a mobile communication terminal through a corresponding slot of a paging channel. In order to reduce time and power required for the mobile communication terminal to demodulate the page message, the mobile communication system transmits a paging indicator indicating existence or non-existence of a page message. Accordingly, the mobile communication terminal is periodically switched from the sleep mode to the idle mode to search the paging indicator, and if the paging indicator indicates existence of the page message, the mobile communication terminal receives and demodulates the page message.

The mobile communication terminal does not directly demodulate the page message of the corresponding slot at every period but searches the paging indicator and determines demodulation of the page message according to indication of the searched paging indicator. A slot carrying the page message has a length of, for example, 20ms and the paging indicator has a length of, for example, 1ms. Thus, searching the paging indicator makes time for processing message processing shorten compared to demodulation of the page message at every period.

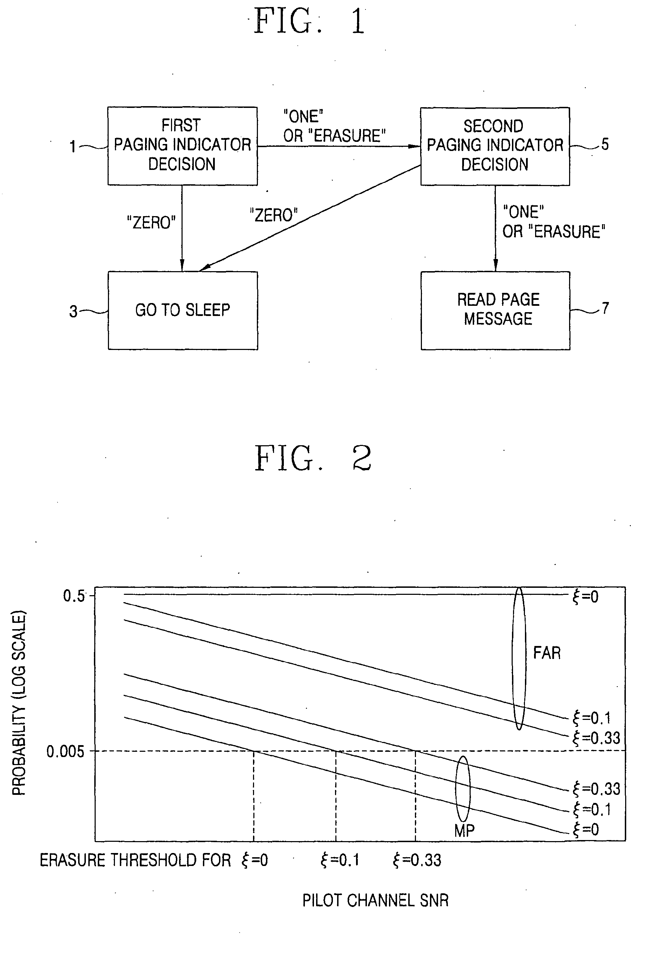

In general, two paging indicators are transmitted in one slot, and Figure 1 illustrates a method for demodulating the page message according to decision of the paging indicator of a general mobile communication terminal.

The mobile communication terminal demodulates one of two paging indicators through a paging indicator channel and decides whether the paging indicator is '0' or '1, or 'erasure' (1).

If the paging indicator is decided to be '0', it means that the paging indicator has not been transmitted. If the paging indicator is decided to be '1', it means that the paging indicator has been transmitted. If the paging indicator is decided to be 'erasure', it means that the paging indicator has been unconditionally transmitted because whether the paging indicator has been transmitted is not reliably decided.

If the paging indicator is decided to be '0', the mobile communication terminal is switched from the idle mode to the sleep mode (3).

Meanwhile, if the paging indicator is decided to be '1' or 'erasure', the mobile communication terminal decides the other paging indicator (5). If the other paging indicator is decided to be '0', the mobile communication terminal is switched to the sleep mode (3). If, however, the other paging indicator is decided to be '1' or 'erasure', the mobile communication terminal receives a page message through a paging channel and demodulates it (7). In other words, at least one of the two paging indicators is decided to be '0', the mobile communication terminal is switched to the sleep mode, and if both paging indicators are all decided to be '1' or 'erasure', the mobile communication terminal receives a page message from the paging channel.

The general method for deciding the paging indicator uses a paging indicator signal-to-noise ratio (SNR) estimate value (paging indicator $E_b/N_o$) and a pilot channel SNR estimate value (pilot channel $E_b/N_o$).

$$1", \text{ if } \frac{PagingIndicator\ E_b/N_o}{PilotChannel\ E_b/N_o} \geq \text{threshold value } (\xi)$$

"0", otherwise                              ---------(1)

Namely, if the ratio between the paging indicator SNR estimate value and the pilot channel SNR estimate value is smaller than a threshold value ($\xi$), the mobile communication terminal decides the paging indicator as '0', or otherwise, the mobile communication terminal decides the paging indicator as '1'.

The threshold value has a fixed value when a transmission rate of the paging indicator and a ratio of transmission power between a paging indicator channel and a pilot channel do not change. Namely, the threshold value can have a different value if the transmission rate of the paging indicator or the ratio of the transmission power change, but when they are constant, the threshold value is fixed to a certain value constantly.

Figure 2 is a graph showing a relation between the threshold value determined by the general method, a false alarm rate (FAR) according to the threshold value, and a miss probability (MP).

The FAR indicates probability that the paging indicator is decided to be '1 or 'erasure' even though it is '0', and the MP indicates probability that the paging indicator is decided to be '0' even through it is actually '1'.

The general paging indicator deciding method of the mobile communication terminal has the following problems.

Because the threshold value is not variably set according to change in the SNR of the pilot channel, the threshold value ($\xi$) is set as a very small value in order to lower the MP in the low SNR of the pilot channel, causing a problem that the FAR is increased.

In addition, even though the threshold value is lowered, if the value of the SNR of the pilot channel is dropped to below a certain value, the MP is increased to an unsuitable level. Thus, in order not to generate 'miss', the paging indicator is decided to be '1' unconditionally. As a result, when the SNR value of the pilot channel is a small value, the FAR is further increased, and in this case, the mobile communication terminal maintains an idle state, remaining awake, to receive a next paging indicator or a page message, rather than entering into the sleep state. Thus, power consumption is increased and standby time (battery usage time) is shortened.

SUMMARY OF THE INVENTION

Therefore, one object of the present invention is to provide a paging indicator deciding method of a mobile communication terminal capable of optimizing standby time and incoming probability of a mobile communication terminal by effectively deciding a paging indicator.

Another object of the present invention is to provide a paging indicator deciding method of a mobile communication terminal capable of effectively deciding a paging indicator by variably setting a threshold value for deciding a paging indicator according to an SNR of a pilot channel.

To achieve at least the above objects in whole or in parts, there is provided a paging indicator deciding method of a mobile communication terminal in which a ratio between a paging indicator SNR estimate value and an SNR estimate value of a pilot channel is compared with a threshold value, wherein the threshold value is variably set according to the SNR of the pilot channel.

To achieve at least these advantages in whole or in parts, there is further provided to a paging indicator deciding method of a mobile communication terminal including: a step in which an SNR of a pilot channel is checked; a step in which if the SNR of the pilot channel is in a range having a high FAR, a threshold value for deciding a paging indicator is determined so that an MP can have the greatest value in a range that the MP does not exceed a maximum standard value; and a step in which if the SNR of the pilot channel is not within the range having the high FAR, a threshold value is determined to obtain the smallest MP in the range where the FAR does not increase.

The MP indicates probability that the paging indicator is misjudged as '0' when the paging indicator is '1'.

The FAR indicates probability that the paging indicator is misjudged as '1' when the paging indicator is '0'.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

BRIEF DESCRIPTION OF THE DRAWINGS

The invention will be described in detail with reference to the following drawings in which like reference numerals refer to like elements wherein:

Figure 1 illustrates a method for demodulating a page message according to deciding of a paging indicator of a general mobile communication terminal;

Figure 2 is a graph showing a relation between a threshold value determined by a general method, an FAR according to the threshold value, and an MP;

Figure 3 is a block diagram showing the construction of a paging indicator deciding apparatus of the mobile communication terminal;

Figure 4 is a flow chart of a paging indicator deciding method of the general mobile communication terminal;

Figure 5 illustrates a probability distribution function of a probability variable 'x';

Figure 6 is a graph showing a relation among an SNR of a pilot channel, a threshold value ($\xi$) and an FAR when the threshold value is determined to reduce the FAR in accordance with a preferred embodiment of the present invention;

Figure 7 is a graph showing a relation among threshold values refined to reduce an MP (Miss Probability) in a range where the FAR does not increase any further, the FAR and the SNR of a pilot channel; and

Figure 8 is a flow chart of a paging indicator deciding method of a mobile communication terminal in accordance with the preferred embodiment of the present invention.

## DETAILED DESCRIPTION OF THE PREFERRED EMBODIMENTS

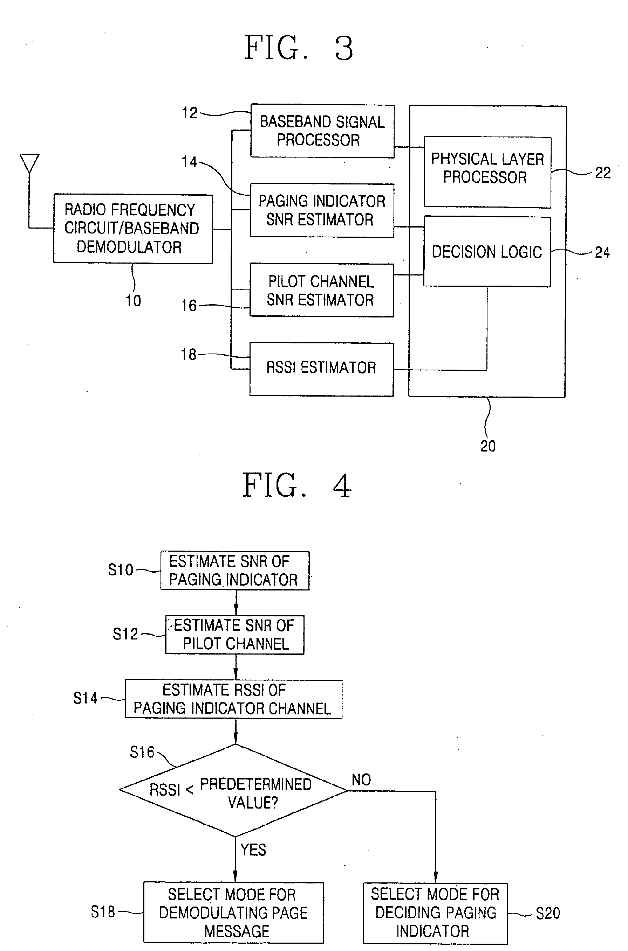

Figure 3 is a block diagram showing the construction of a paging indicator deciding apparatus of the mobile communication terminal.

As shown in Figure 3, a paging indicator deciding apparatus of a general mobile communication terminal includes: a radio frequency circuit/baseband demodulator 10 for converting an RF signal received through an antenna ANT into a baseband signal and demodulating the baseband signal; a baseband signal processor 12 for converting the demodulated baseband signal into a physical layer PDU (Protocol Data Unit); a paging indicator SNR estimator 14 for estimating an SNR ($E_b/N_o$) of the paging indicator demodulated in the radio frequency circuit/baseband demodulator 10; a pilot channel SNR estimator 16 for estimating an SNR of a pilot channel demodulated in the RF circuit/baseband demodulator 10; an RSSI (Received Signal Strength Indicator) estimator 18 for estimating an RSSI of a paging indicator channel received through the RF circuit/baseband demodulator 10; and a central processing unit (CPU) 20 for deciding a paging indicator of the paging indicator channel and determining whether to demodulate the page message of a paging channel according to the decision result.

The CPU 20 includes a physical layer processor 22 for changing a physical layer PDU to a physical layer SDU (Service Data Unit); and a decision logic 24 for determining whether to decide a paging indicator or whether to demodulate a paging channel according to the estimated paging indicator channel RSSI value and deciding the paging indicator by using the estimated paging indicator SNR and the estimated SNR of the pilot channel.

The operation of the paging indicator deciding apparatus of a general mobile communication terminal will now be described.

Figure 4 is a flow chart of a paging indicator determining method of the general mobile communication terminal.

The RF circuit/baseband demodulator 10 converts a paging indicator signal, which has been modulated to an RF carrier, received through the antenna ANT into a baseband signal and demodulates it. The demodulated paging indicator signal is transmitted to the paging indicator SNR estimator 14, and the paging indicator SNR estimator 14 estimates an SNR of the paging indicator, namely, $E_b/N_o$ (one bit energy-to-background noise power ratio). The estimated paging indicator SNR is provided to the decision logic 24 (step S10).

The pilot channel signal which has been demodulated by the RF circuit/baseband modulator 10 is transmitted to the pilot channel SNR estimator 16, and the pilot channel SNR estimator 16 estimates an SNR ($E_b/N_o$) of the pilot channel. The estimated SNR of the pilot channel is provided to the decision logic 24 (step S12).

The RSSI estimator 18 estimates an RSSI, namely, an average Ec/Io (average energy of one chip-to-total received output power ratio), of the received paging indicator channel, and provides the estimated RSSI of the paging indicator channel to the decision logic 24 (step S14).

If the RSSI of the paging indicator channel is smaller than a predetermined value, the decision logic 24 selects a mode for demodulating the page message (steps S16 and S18), and if the RSSI of the paging indicator channel is not smaller than the predetermined value, the decision logic 24 selects a mode for deciding a paging indicator (step S20).

If the mode for deciding a paging indicator is selected, the decision logic 24 of the mobile communication terminal decides a paging indicator with reference to equation (1) on the basis of the paging indicator SNR provided by the paging indicator SNR estimator 14 and the pilot channel SNR provided by the pilot channel SNR estimator 16.

In the present invention, the threshold value ($\xi$), a basis for deciding the paging indicator, is variably set according to the SNR value of the pilot channel.

In addition, a decision value of the paging indicator does not include 'erasure'. If, however, the threshold value ($\xi$) is smaller than '0' and thus the FAR exceeds 50%, the decision system is insignificant, so the paging indicator can be decided as 'erasure'. In this respect, if probability that a specific value, namely, the FAR, exceeds 20% is increased, the mobile communication terminal operates in the mode for directly receiving a page message, rather than using the paging indicator. Thus, there is little possibility that deciding 'erasure' is generated.

The paging indicator deciding method of a mobile communication terminal will now be described.

In the present invention, the mobile communication terminal determines the threshold value ($\xi$) so that the MP has the greatest value in a range but does not exceed an arbitrary standard value, namely, a maximum standard value ($MP_{MAX}$). The standard value ($MP_{MAX}$) is set commonly as one of 0.005 and 0.001. In order to determine the threshold value ($\xi$), a probability distribution function is used. The probability distribution function indicates a distribution of a probability variable 'x' expressed as equation (2) when the paging indicator is decided as '1':

$$x = \frac{PagingIndicator\ ^{E_b}/_{N_o}}{PilotChannel\ ^{E_b}/_{N_o}} \quad \text{--------------(2)}$$

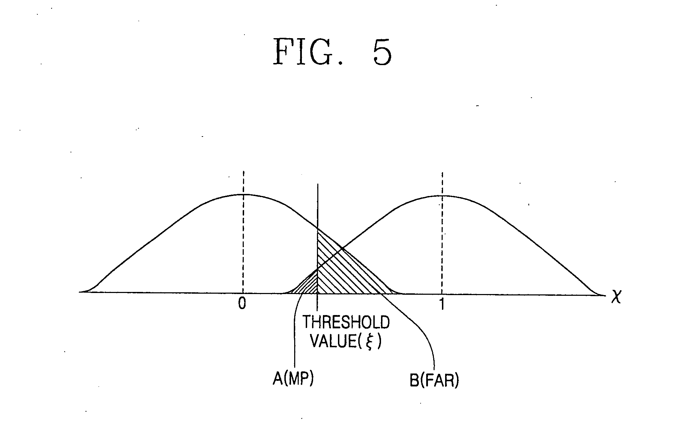

Figure 5 illustrates a probability distribution function of a probability variable 'x'.

As shown in Figure 5, the distribution of 'x' is a resulted obtained from experimentation and has normalized distribution with a uniform average. A region denoted by 'A' indicates an MP and a region denoted by 'B' indicates FAR.

The mobile communication terminal generates probability distribution function for the probability variable 'x', and if the standard value ($MP_{MAX}$) is 0.005, the mobile communication terminal determines a threshold value ($\xi$) of the probability distribution function according to the SNR of the pilot channel so that the MP can have the highest value within a range of not exceeding 0.005 and thus the FAR may not be lowered. A standard deviation of the normalized distribution increases as the SNR of the pilot channel is reduced.

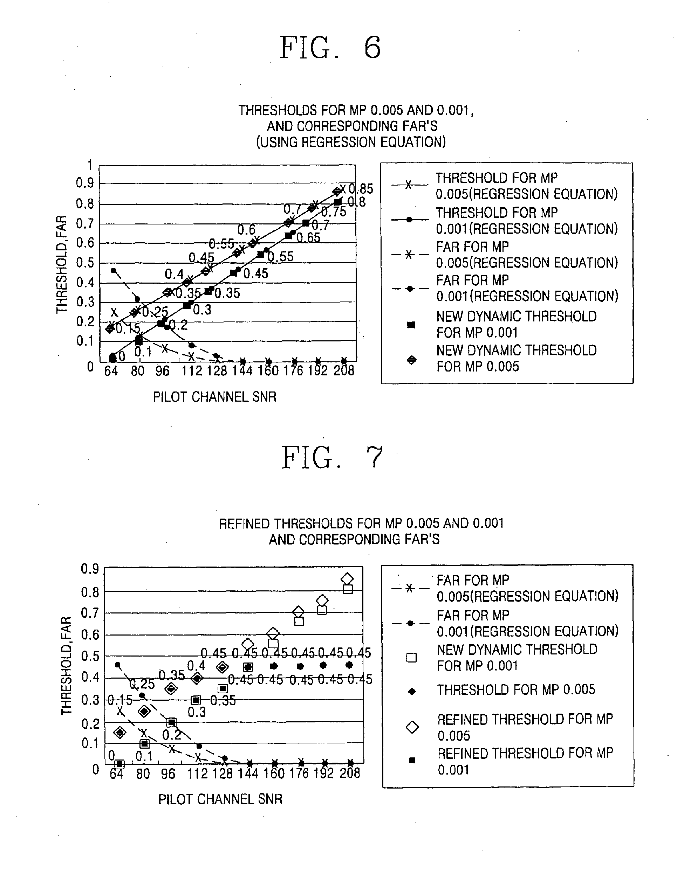

Figure 6 is a graph showing a relation among an SNR of a pilot channel, a threshold value ($\xi$) and an FAR when the standard values of MP are 0.005 and 0.001, respectively.

As shown in Figure 6, threshold values become greater as the pilot channel SNR increases. For example, in case that MP is 0.005, if the pilot channel SNR is 80, a threshold value is 0.25, if the pilot channel SNR is 96, a threshold value is 0.35, and if the pilot channel SNR is 182, a threshold value is 0.75.

In addition, as shown in Figure 6, if the threshold value is determined so that the MP is equal to the standard value ($MP_{MAX}$), the FAR is reduced as the pilot channel SNR becomes increased. If the threshold value is increased to above a specific value, the FAR becomes close to 0%. For example, if the FM standard value ($MP_{MAX}$) is 0.005 and the threshold value is 0.45 or above, the FAR is close to 0%.

Figure 7 is a graph showing threshold values refined to reduce the MP in a range that the FAR does not increase any further after the threshold values were determined to have the greatest values within the range that MA does not exceed the standard value ($MP_{MAX}$).

For example, in case that the FA standard value ($MP_{MAX}$) is 0.005, if the pilot channel SNR is 80, the threshold value is 0.25 and the FAR is 0.15, if the pilot channel SNR is 112, the threshold value is 0.4 and the FAR is 0.05, and if the pilot channel SNR is 128, the threshold value is 0.45 and the FAR is 0.

If the pilot channel SNR is greater than 128, the FAR is close to 0. Then, the mobile communication terminal determines the threshold value to reduce the MP (the portion 'A' in Figure 5) in a range that the FAR is not increased any more, rather than determines the threshold value so that the MP is equal to $MP_{MAX}$.

Accordingly, in Figure 6, in case that the MP standard value ($MP_{MAX}$) is 0.005, if the pilot channel SNR is 128, the threshold value is determined to be 0.45, if the pilot channel SNR is 160, the threshold value is determined to be 0.6, and if the pilot channel SNR is 192, the threshold value is determined to be 0.75.

However, in Figure 7, in case that the MP standard value ($MP_{MAX}$) is 0.005, if the pilot channel SNR is 128, the threshold value is determined to be 0.45, if the pilot channel SNR is 160, the threshold value is determined to be 0.45, and if the pilot channel SNR is 192, the threshold value is determined to be 0.45. Namely, if the pilot channel SNR becomes greater than 128, the FAR becomes close to 0, so the mobile communication terminal determines the threshold value as 0.45, namely, the threshold value when the pilot channel SNR is 128, so that the MP can be reduced to less than 0.005.

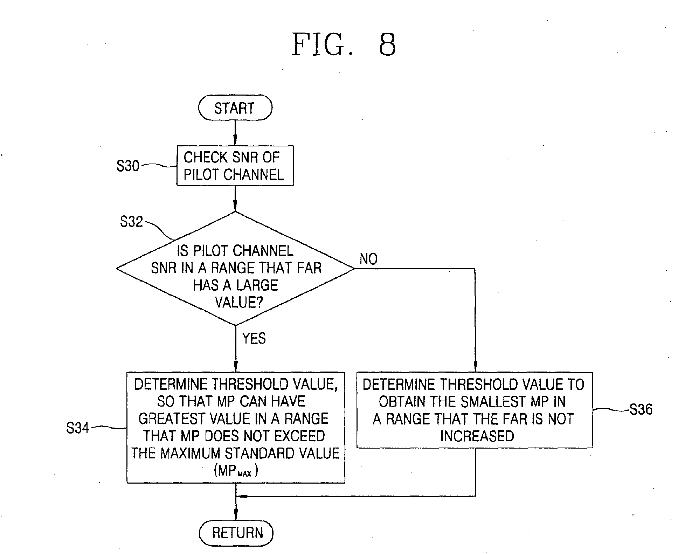

Figure 8 is a flow chart of a paging indicator determining method of a mobile communication terminal in accordance with the preferred embodiment of the present invention.

The mobile communication terminal checks an SNR of a pilot channel (step S30). If the checked SNR of the pilot channel is in a range that the FAR has a large value (step S32), the mobile communication terminal determines a threshold value so that an MP can have the greatest value in a range that the MP does not exceed the standard value ($MP_{MAX}$) (step S34).

The mobile communication terminal checks the pilot channel SNR and an FAR at the determined threshold value, and if the checked FAR exceeds 20%, the mobile communication terminal is switched from a paging indicator decision mode to a page message demodulation mode. If, however, the checked FAR does not exceed 20%, the mobile communication terminal maintains the current paging indicator decision mode. Thus, in the present invention, when the paging indicator is decided, it cannot occur that the paging indicator is decided to be 'erasure'.

If the SNR of the pilot channel checked in the step S32 is not in the range that the SNR has the large value, namely, if the SNR of the pilot channel belongs to a range that the FAR has a value close to 0%, the mobile communication terminal determines a threshold value to obtain the smallest MP in a range that the FAR is not increased any more (step S36).

Thereafter, when the mobile communication terminal is operated in the mode for deciding the paging indicator, the mobile communication terminal compares a ratio between the paging indicator SNR estimate value (paging Indicator $E_b/N_o$) and the pilot channel SNR estimate value (pilot channel $E_b/N_o$) with the determined threshold value.

If the ratio between the paging indicator SNR estimate value and the pilot channel SNR estimate value is not smaller than the threshold value like in equation (1), the mobile communication terminal decides the paging indicator as 1, and if the ratio therebetween is smaller than the threshold value, the mobile communication terminal decides the paging indicator as 0.

As so far described, the paging indicator deciding method of a mobile communication terminal of the present invention has the following advantages.

That is, for example, since the threshold value for deciding the paging indicator is variably set according to an SNR of the pilot channel, the MP and the FAR are reduced and the paging indicator can be decided effectively and accurately.

In addition, since the paging indicator is accurately decided, standby time and incoming probability of the mobile communication can be optimized.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

### Claims

1. A paging indicator deciding method of a mobile communication terminal in which a ratio between a paging indicator SNR (Signal-to-Noise Ratio) estimate value and an SNR estimate value of a pilot channel is compared with a threshold value,
   wherein the threshold value is variably set according to the SNR of the pilot channel.

2. The method of claim 1, wherein, in probability distribution function indicating distribution of probability variables expressed as a ratio between the paging indicator SNR estimate value and the pilot channel SNR estimate value, the threshold value is determined so that an Miss Probability (MP) can have the greatest value in a range that the MP does not exceed a maximum standard value.

3. The method of claim 2, wherein the maximum standard value includes one of 0.005 and 0.001.

4. The method of claim 2, wherein, when the pilot channel SNR is in a range that the False Alarm Rate (FAR) is smaller than a predetermined value, the threshold value is determined, so that the smallest MP can be obtained in a range that the FAR does not increase.

5. The method of claim 4, wherein the predetermined value is 0.

6. The method of claim 1, wherein if the pilot channel SNR is in a range that the FAR is increased greater than a predetermined value, the mobile communication terminal is switched to a mode for demodulating a page message.

7. The method of claim 6, wherein the predetermined value includes 20%.

8. A paging indicator deciding method of a mobile communication terminal comprising:

   a step in which an SNR (Signal-to-Noise Ratio) of a pilot channel is checked;
   a step in which if the SNR of the pilot channel is in a range having a high FAR, a threshold value for deciding a paging indicator is determined so that an MP can have the greatest value in a range that the MP does not exceed a maximum standard value; and

a step in which if the SNR of the pilot channel is not within the range having the high FAR, a threshold value is determined to obtain the smallest miss probability (MP) in the range where the FAR does not increase.

9. The method of claim 8, further comprising:

a step in which a ratio between a paging indicator SNR estimate value and the pilot channel SNR is compared with the predetermined threshold value;
a step in which if the ratio between the paging indicator SNR estimate value and the pilot channel SNR is not smaller than the predetermined threshold value, it is decided that the paging indicator indicates that a page message has been transmitted; and
a step in which if the ratio between the paging indicator SNR estimate value and the pilot channel SNR is smaller than the predetermined threshold value, it is decided that the paging indicator indicates that a page message has not been transmitted.

10. The method of claim 8, wherein the MP indicates probability that the paging indicator is misjudged as '0' when the paging indicator is '1', and the FAR indicates probability that the paging indicator is misjudged as '1' when the paging indicator is '0'.

# FIG. 1

```
            "ONE"
            OR "ERASURE"
┌──────────────────┐              ┌──────────────────┐
│      FIRST        │─────────────▶│     SECOND        │
1~│ PAGING INDICATOR │              │ PAGING INDICATOR │~5
│    DECISION      │              │    DECISION      │
└──────────────────┘              └──────────────────┘
        │                                  │
  "ZERO"│        "ZERO"                    │ "ONE"
        │                                  │ OR "ERASURE"
        ▼                                  ▼
┌──────────────────┐              ┌──────────────────┐
3~│   GO TO SLEEP    │              │    READ PAGE     │~7
│                  │              │    MESSAGE       │
└──────────────────┘              └──────────────────┘
```

# FIG. 2

# FIG. 3

# FIG. 4

# FIG. 5

THRESHOLD
VALUE($\xi$)

A(MP)          B(FAR)

# FIG. 6

THRESHOLDS FOR MP 0.005 AND 0.001,
AND CORRESPONDING FAR'S
(USING REGRESSION EQUATION)

# FIG. 7

REFINED THRESHOLDS FOR MP 0.005 AND 0.001
AND CORRESPONDING FAR'S

# FIG. 8

START

S30 — CHECK SNR OF PILOT CHANNEL

S32 — IS PILOT CHANNEL SNR IN A RANGE THAT FAR HAS A LARGE VALUE?

NO

YES

S34 — DETERMINE THRESHOLD VALUE, SO THAT MP CAN HAVE GREATEST VALUE IN A RANGE THAT MP DOES NOT EXCEED THE MAXIMUM STANDARD VALUE ($MP_{MAX}$)

DETERMINE THRESHOLD VALUE TO OBTAIN THE SMALLEST MP IN A RANGE THAT THE FAR IS NOT INCREASED — S36

RETURN